# NEW EUROPEAN PATENT SPECIFICATION

(11) **EP 3 524 444 B2**
(45) Date of publication and mention of the opposition decision: **24.01.2024**
(45) Mention of the grant of the patent: 17.03.2021
(21) Application number: 19166230.3
(22) Date of filing: 28.04.2011
(51) Int. Cl.: B60C 11/16, B60C 11/00

(54) **PASSENGER CAR WINTER TYRE**
PERSONENKRAFTWAGENWINTERREIFEN
PNEUMATIQUE HIVER DE VOITURE DE TOURISME

(30) Priority: 03.05.2010 FI 20100190
(43) Date of publication of application: 14.08.2019
(62) Divisional of application: 11777325.9
(73) Proprietor: Spikesafe OY, 20360 Turku (FI)
(72) Inventor: HIETARINTA-SALAKARI, Marja, 20360 Turku (FI)
(74) Representative: Laine IP Oy

(56) References cited:
- EP-B1- 1 798 069
- GB-A- 1 407 404
- JP-A- S60 222 303
- KR-Y1- 200 438 809
- NO-B- 132 140
- SE-C1- 227 484
- SE-C2- 523 713
- US-A- 3 837 386
- US-A- 3 987 831
- US-S- D 431 215
- Schwalbe North America: "New Spike tires", , 30 August 2007 (2007-08-30), XP002687572, Retrieved from the Internet: URL:http://www.schwalbetires.com/new_spike _tires_home [retrieved on 2012-11-20]
- SMOOTH-ON: "SHORE HARDNESS SCALES", , 17 November 2008 (2008-11-17), XP002687573, Retrieved from the Internet: URL:http://www.smooth-on.com/pdf/durometer _with_logo.pdf [retrieved on 2012-11-20]

## Description

This invention relates to passenger car winter tyre equipped with studs in which the passenger car is intended for normal use and in which the number of studs in the tyre is greater than that stated in the amendment, dated from 1 June 2009, to the Finnish Ministry of Transport and Communications Decree 408/2003 concerning passenger car tyre studs.

For example Finnish patents FI-115620 and FI-115761 address passenger car tyre studs known as such. These studs and stud inventions aim to create lighter weight studs. Winter tyres equipped with lighter studs cause less wear on the surface material of roads, i.e. on asphalt. A stud solution, which is durable and as light as possible, has been under continuous development. Plastic and aluminium studs are known, but they are not as durable as studs with a steel body. Gravel and asphalt dust rapidly wear out the plastic or aluminium body surrounding the hard metal tip which easily leads to the hard metal tip coming off. Finnish patent applications 20080678 and 20080679 address studs and a winter tyre equipped with studs and include various solutions by which studs causing less wear to the road surface material can be created. The French patent FR 2131913 addresses winter tyres of the "trailer truck" type, in which 200-300 studs per tyre are used.

SE 227484 C1 and KR 200438809 Y1 both disclose further exemplary studs for a passenger car tyre. The studs feature a cylindrical tip and a chamfered bottom flange with a circular cross-section.

There is a common decree in the Scandinavian countries concerning passenger car tyre studs and the measurements and use of studs. The amendment to Decree 408/2003 dating 1 June 2009 states the following: area of application, the number and installation of studs, type approval of studs, performer of measurements, the measurement of the piercing force of a passenger car tyre stud, the measurement of the piercing force of a light lorry tyre and a lorry tyre, and the studs intended for specified tyres. The new stud and its dimension according to the invention clearly fall within the permitted limits described in the Decree, although the number of studs is clearly greater than that stated in the Decree. The stud according to the invention has been thoroughly tested in various conditions by the VTT Technical Research Centre of Finland. The grip measurements were performed by Test World Oy, which is a measurement institute approved by the Finnish Transport Safety Agency (Trafi). Road wear was measured by Roadlux Ky using a method approved by Trafi (VTT method). The results achieved with the stud were compared to the limit values set in the Decree. A clear improvement in the wear of road surface material is achieved using the stud according to the invention, even when the number of studs in the tyre is doubled. The tests have indicated that only about 50 % of the road surface material wears out with the lighter weight studs as compared to other studs. Practical tests on slippery ice have also indicated that winter tyres and studs according to the invention provide more than 40 % better grip.

A winter tyre according to the invention is characterized in that the shape of the stud combined with the elasticity of the rubber composition of the winter tyre gives the stud a piercing force less than 120 N. The studs are made up of a body part with a tip which resists wear, the cross-section of the tip being essentially round-shaped and having a cross-sectional area of the tip of the stud is less than 3.14 mm². The number of studs in the tyre is greater than 50 studs per one meter of rolling circumference. All of the above-mentioned are achieved with a winter tyre and stud according to the invention.

As mentioned above, the tests carried out as such prove that a stud with these dimensions wears out only half of the road surface compared to studs now in use. The tests also prove that the grip is essentially better in both acceleration and braking than with known studs. It is also worth mentioning that the number of studs in the tyre does not have an effect on the wearing out of the road surface. This is due to the fact that the area of the bottom flange is that much smaller than in known studs, that the piercing force directed at the road surface presses the stud inside the tyre. However, the piercing force of the stud tip is sufficient enough for its purpose, i.e. it penetrates an icy surface at a sufficient enough force.

The object of the invention is also a stud for the tyre, which comprises a body part with a tip which resists wear, the cross-section of the tip being essentially round-shaped. The stud according to the invention is characterized by the cross-sectional area of the tip of the stud being 1.80-3.14 mm². Various embodiments of the invention have been presented in the dependent claims. The essential facts in these embodiments are the dimensions and shape of the bottom flange of the stud, the number of studs in the tyre, and the projection of the wear-resistant tip of the stud from the surface of the tyre, as well as the position of the studs on the tread of the tyre.

### Description of the invention.

The number of studs in the passenger car winter tyre is greater than that stated in the amendment to the Finnish Ministry of Transport and Communications Decree 408/2003 dating 1 June 2009 concerning passenger car tyre studs. The winter tyre has more than 50 studs per one metre of the rolling circumference of the tyre. The number can also be more than 60, 70, 80, 90 or even more than 100 studs per one metre of the rolling circumference of the tyre. The size, weight and/or shape of the stud in the tyre is such that the wear of the road surface caused by such a studded tyre is not greater than that of a studded tyre equipped with studs which fulfil requirements. The shape and area of the bottom flange of the stud, together with the elasticity of the winter tyre rubber compound create a piercing force of less than 120 N for the stud. The measurement of the stud's piercing force and of the wear caused on the road surface by the studded tyre are performed using adequate measuring equipment, and the type approval of a stud measured in this way is valid only when used together with a compatible tyre. The projection of the tip of the stud from the surface of the tyre in a new tyre must be under 0.5 mm, and under 1.0 mm for a used tyre, advantageously ca. 0.5-0.8 mm. The studs can be placed onto the entire area of the tyre tread. It has been established that the studs at the edges of the tyre tread cause more wear on the road surface than studs at the centre of the tread.

A stud according to the invention comprises a body part with a tip which resists wear, the cross-section of the tip being essentially round-shaped and the area of the tip being 1.80-3.14 mm². Thus the diameter øa is 2.0 mm or less. The diameter of the bottom flange of the stud øb is 6.5-7.5 mm or less. The shape of the bottom flange can be round or a polygon. In principle, the shape of the bottom flange can be anything as long as it fulfils, together with the elasticity of the rubber compound, the requirement of a piercing force under 120 N.

The wear-resisting tip of the stud does not necessarily have to be a known hard metal tip; it can also be made of any other suitable material, such as a ceramic substance, an industrial diamond, or carbon nitride (CN₃). The elasticity of the winter tyre rubber compound is that of a normal rubber compound used in winter tyres. The rubber compound can be harder where the bottom flange is located, for instance 5-15 "Shores", advantageously ca. 8 "Shores" harder than the surface rubber compound. The normal elasticity of a winter tyre rubber compound is 50-80 "Shores".

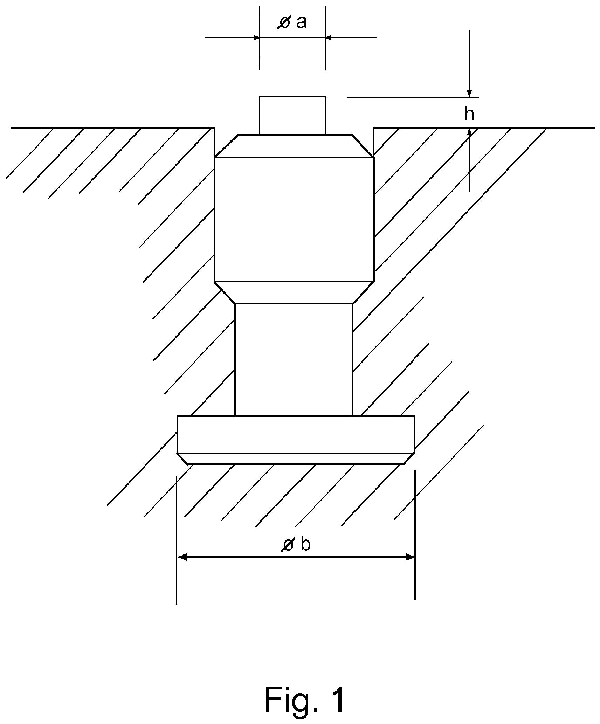

Figure 1 shows a stud according to an embodiment of the invention fixed onto a tyre.
Figure 2 shows an ABS braking test with three different studded tyres.
Figure 3 shows an acceleration test with the same tyres.
Figure 4 shows lap times driven on an ice track, and
Figure 5 shows road wear with four different tyres.

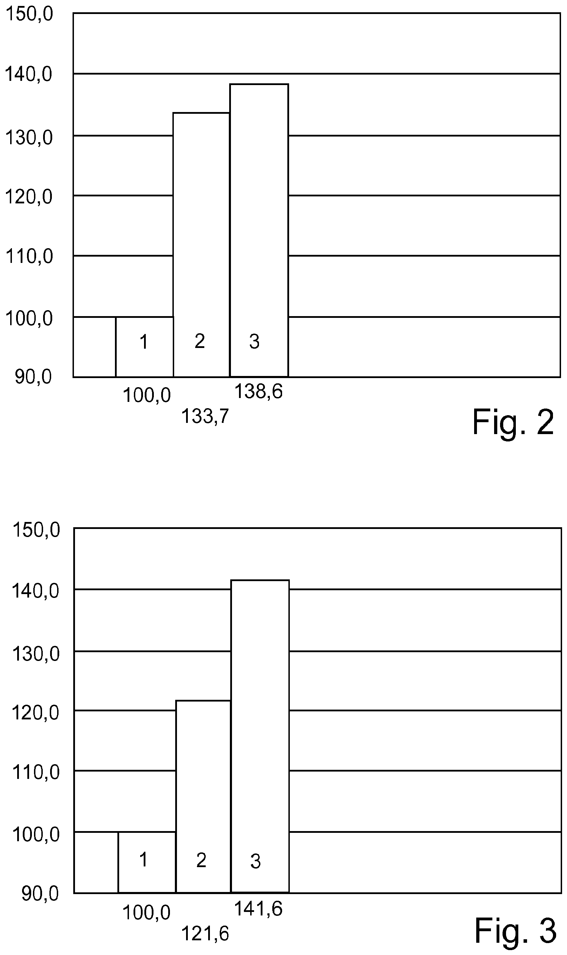

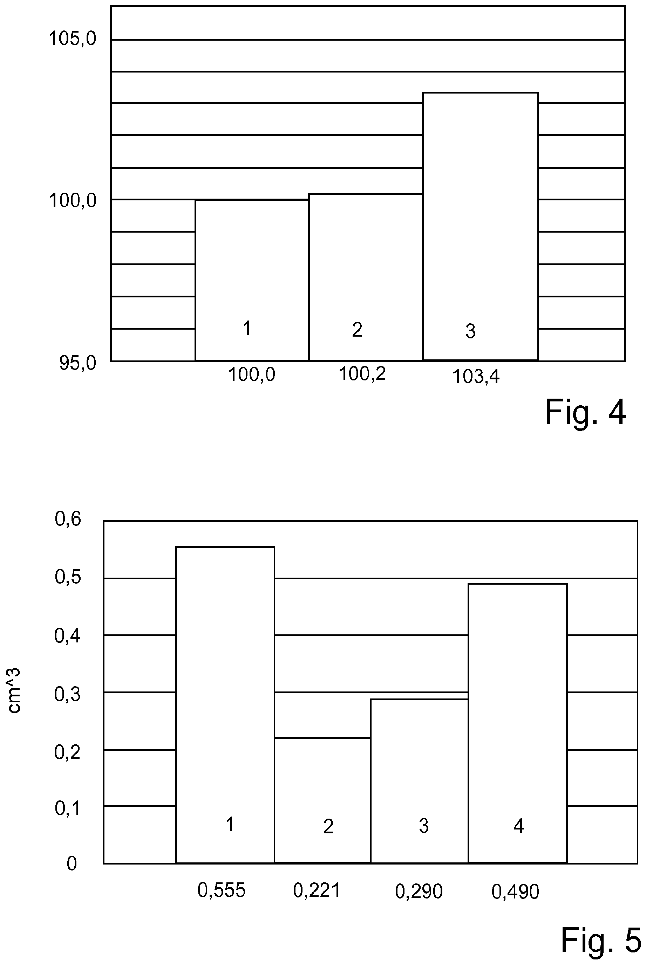

In figures 2-5 reference tyre 1 is equipped with studs in compliance with the amendment to Decree 408/2003 dating 1 June 2009. In figures 2-4 the reference tyre has been directed at bar section 100 of the diagrams. In figure 2, bar 2 depicts the same tyre equipped with studs 2 according to the invention, and bar 3 equipped with other studs 3 according to the invention. The ABS braking test indicates that the results are 33.7 and 38.6 better than the result given by the reference tyre. Figure 3 shows the average of the acceleration test TCS, in which bar 1 is the reference tyre, numbers 2 and 3 are tyres according to the invention, the same as in Figure 2. The tests indicate that the results 21.6 and 41.6 are better than with reference tyres. Figure 4 shows the averages of lap times driven on the ice track, which also show that the tyres and studs according to the invention yield better results than the reference tyres.

Figure 5 indicates proof that the tyres and studs according to the invention are not just novelties; rather, the invention "also differs essentially from the prior art", in other words its level of inventiveness is high.

Road wear with the reference tyre is 0.555 cm³,
with tyre 2 according to the invention; 0.221 cm³,
with tyre 3 according to the invention; 0.290 cm³, and
with the known Nokia Hakkapeliitta 5 tyre, purchased from a tyre shop, 0.490 cm³.

All of the above-mentioned tests driven on ice tracks not only yield fine theoretical numbers, but also show that the braking and acceleration tests done with the passenger car give a clear impression that passenger cars clearly stop faster and accelerate better with the tyres and studs according to the invention are used as compared to known tyres and studs.

## Claims

1. A passenger car winter tyre equipped with studs for normal use, which studs are made up of a body part with a tip which resists wear, the cross-section of the tip being essentially round-shaped, **characterized in that**:
the number of studs in the tyre is greater than 50 studs per one meter of rolling circumference,
the shape of the stud together with the elasticity of the rubber compound of the winter tyre create a piercing force of less than 120 N on the stud, and **in that**
the cross-sectional area of the tip of the stud is less than 3.14 mm².

2. The passenger car winter tyre according to claim 1, **characterized in that** the size, weight and/or shape of the stud in the tyre is such that the projection (h) of the tip of the stud from the surface of a new tyre is less than 0.5 mm and remains less than 1.0 mm in a used tyre whereupon the wear caused to the road surface by this type of tyre is not greater than the wear caused by a studded tyre in compliance with regulations.

3. The passenger car winter tyre according to claim 1 or 2, **characterized in that** the size, weight and/or shape of the stud in the tyre is such that the projection (h) of the tip of the stud from the surface of remains ca. 0.5-0.8 mm in a used tyre.

4. The passenger car winter according to claims 1, 2 or 3, **characterized in that** the elasticity of the rubber compound of the tyre is 50-80 "Shores".

5. The passenger car winter according to any one of the preceding claims, **characterized in that** the elasticity of the rubber compound at the location of the bottom flange is ca. 5-15 "Shores" harder than the elasticity of the surface rubber compound.

6. The passenger car winter according to any one of the preceding claims 1 to 4, **characterized in that** the elasticity of the rubber compound at the location of the bottom flange is ca. 8 "Shores" harder than the elasticity of the surface rubber compound.

7. The passenger car winter according to any one of the preceding claims, **characterized in that** the cross-sectional area of the tip of the stud is 1.80-3.12 mm².

8. The passenger car winter according to any one of the preceding claims, **characterized in that** the shape of the bottom flange is round or a polygon.

9. The passenger car winter according to any one of the preceding claims, **characterized in that** the tip of the stud is made of hard metal, ceramic substance, industrial diamond, or carbon nitride (CN₃).

## Patentansprüche

1. Winterreifen für Personenkraftwagen, der mit Spikes für normalen Gebrauch ausgerüstet ist, wobei die Spikes aus einem Körperteil mit einer Spitze, die Verschleiß widersteht, gebildet sind, wobei der Querschnitt der Spitze im Wesentlichen rund ist, **dadurch gekennzeichnet, dass**:
die Zahl von Spikes in dem reifen größer als 50 Spikes pro einem Meter rollenden Umfangs ist,
die Form des Spikes zusammen mit der Elastizität der Gummimischung des Winterreifens eine Durchstoßkraft von weniger als 120 N auf dem Spike erzeugen und dadurch, dass
die Querschnittsfläche der Spitze des Spikes weniger als 3,14 mm² beträgt.

2. Winterreifen für Personenkraftwagen nach Anspruch 1, **dadurch gekennzeichnet, dass** die Größe, das Gewicht und/oder die Form des Spikes in dem Reifen so ist, dass der Vorsprung (h) der Spitze des Spikes von der Oberfläche eines neuen Reifens geringer als 0,5 mm ist und weniger als 1,0 mm in einem gebrauchten Reifen bleibt, woraufhin der durch diesen Reifentyp an der Straßenoberfläche verursachte Verschleiß nicht größer als der Verschleiß ist, der durch einen mit Spikes versehenen Reifen in Übereinstimmung mit Vorschriften verursacht wird.

3. Winterreifen für Personenkraftwagen nach Anspruch 1 oder 2, **dadurch gekennzeichnet, dass** die Größe, das Gewicht und/oder die Form des Spikes in dem Reifen so ist, dass der Vorsprung (h) der Spitze des Spikes von der Oberfläche von ungefähr 0,5-0,8 mm in einem gebrauchten Reifen bleibt.

4. Winterreifen für Personenkraftwagen nach Anspruch 1, 2 oder 3, **dadurch gekennzeichnet, dass** die Elastizität der Gummimischung des Reifens 50-80 "Shores" beträgt.

5. Winterreifen für Personenkraftwagen nach einem der vorstehenden Ansprüche, **dadurch gekennzeichnet, dass** die Elastizität der Gummimischung an der Stelle des unteren Flansches ca. 5-15 "Shores" härter als die Elastizität der Oberflächengummimischung ist.

6. Winterreifen für Personenkraftwagen nach einem der vorstehenden Ansprüche 1 bis 4, **dadurch gekennzeichnet, dass** die Elastizität der Gummimischung an der Stelle des unteren Flansches ca. 8 "Shores" härter als die Elastizität der Oberflächengummimischung ist.

7. Winterreifen für Personenkraftwagen nach einem der vorstehenden Ansprüche, **dadurch gekennzeichnet, dass** die Querschnittsfläche der Spitze des Spikes weniger als 1,80-3,12 mm² beträgt.

8. Winterreifen für Personenkraftwagen nach einem der vorstehenden Ansprüche, **dadurch gekennzeichnet, dass** die Form des unteren Flansches rund oder ein Vieleck ist.

9. Winterreifen für Personenkraftwagen nach einem der vorstehenden Ansprüche, **dadurch gekennzeichnet, dass** die Spitze des Spikes aus Hartmetall, Keramiksubstanz, Industriediamant oder Carbonitrid (CN₃) hergestellt ist.

## Revendications

1. Pneu d'hiver pour véhicule particulier équipé de crampons pour une utilisation sur route normale, lesquels crampons sont réalisés en une partie de corps avec un bout qui résiste à l'usure, la section transversale du bout étant essentiellement de forme ronde, **caractérisé en ce que** :
le nombre de crampons dans le pneu est supérieur à 50 crampons par mètre de circonférence de roulement,
la forme du crampon conjointement avec l'élasticité du composé de caoutchouc du pneu d'hiver créent une force de percement de moins de 120 N sur le crampon, et **en ce que**
la superficie de section du bout du crampon est inférieure à 3,14 mm².

2. Pneu d'hiver pour véhicule particulier selon la revendication 1, **caractérisé en ce que** la taille, le poids et/ou la forme du crampon dans le pneu est tel que la projection (h) du bout du crampon depuis la surface d'un nouveau pneu est inférieure à 0,5 mm et reste inférieure à 1,0 mm dans un pneu usagé, si bien que l'usure causée à la surface de route par ce type de pneu n'est pas supérieure à l'usure causée par un pneu à crampon conformément aux règlementations.

3. Pneu d'hiver pour véhicule particulier selon la revendication 1 ou 2, **caractérisé en ce que** la taille, le poids et/ou la forme du crampon dans le pneu est tel que la projection (h) du bout du crampon depuis la surface de reste d'environ 0,5-0,8 mm dans un pneu usagé.

4. Pneu d'hiver pour véhicule particulier selon la revendication 1, 2 ou 3, **caractérisé en ce que** l'élasticité du composé de caoutchouc du pneu est de 50- 80 « shores ».

5. Pneu d'hiver pour véhicule particulier selon l'une quelconque des revendications précédentes, **caractérisé en ce que** l'élasticité du composé de caoutchouc à l'emplacement de la bride inférieure est d'environ 5-15 « shores » plus dure que l'élasticité du composé de caoutchouc de surface.

6. Pneu d'hiver pour véhicule particulier selon l'une quelconque des revendications précédentes 1 à 4, **caractérisé en ce que** l'élasticité du composé de caoutchouc à l'emplacement de la bride inférieure est d'environ 8 « shores » plus dure que l'élasticité du composé de caoutchouc de surface.

7. Pneu d'hiver pour véhicule particulier selon l'une quelconque des revendications précédentes, **caractérisé en ce que** la superficie de section du bout du crampon est de 1,80- 3,12 mm².

8. Pneu d'hiver pour véhicule particulier selon l'une quelconque des revendications précédentes, **caractérisé en ce que** la forme de la bride inférieure est ronde ou polygonale.

9. Pneu d'hiver pour véhicule particulier selon l'une quelconque des revendications précédentes, **caractérisé en ce que** le bout du crampon est constitué de métal dur, substance céramique, diamant industriel, ou nitrure de carbone (CN₃).
